# EUROPEAN PATENT SPECIFICATION

(11) **EP 3 194 115 B1**
(45) Date of publication and mention of the grant of the patent: **15.01.2020**
(21) Application number: 14902174.3
(22) Date of filing: 17.09.2014
(51) Int. Cl.: B23Q 5/06, B23Q 5/26, B23Q 5/04

(54) **HIGH SPEED SPINDLE**
HOCHGESCHWINDIGKEITSSPINDEL
BROCHE À GRANDE VITESSE

(43) Date of publication of application: 26.07.2017
(73) Proprietor: Gal-way Metal Cutting Technologies Ltd., 1811101 Afula (IL)
(72) Inventor: MILLER, Zvi, 3608126 Kiryat Tivon (IL)
(74) Representative: Pearl Cohen Zedek Latzer Baratz UK LLP
(86) International application number: PCT/IL2014/050831
(87) International publication number: WO 2016/042539

(56) References cited:
- EP-A1- 2 623 258
- EP-A2- 1 907 169
- WO-A2-2014/138481
- US-A1- 2001 014 281

## Description

### BACKGROUND OF THE INVENTION

Spindle assemblies may be assembled at machining devices such as lathes, milling machines, drilling machines, etc. For example, spindle assemblies may be assembled at a taper socket of the tool holder of a machining device and may use high pressure fluid provided through the main spindle. Such spindle assemblies may provide high rotation speeds. So far utilization of such high speed spindles has been limited due to technical problems preventing their wide commercial use.

EP 2623258 A1 discloses a spindle assembly configured to be assembled at the internal taper socket of a tool holder, the assembly having a rear end and a front end, the front end being proximal to a tool clamping system, and the rear end being proximal to an end of the assembly opposite to the tool clamping system

### SUMMARY OF THE INVENTION

According to embodiments of the present invention there is provided spindle assembly configured to be assembled in a machining device the spindle assembly having a rear end and a front end, with the front end being proximal to a tool clamping system of the spindle assembly, and the rear end opposite to the tool clamping system, the assembly may include: a rotating shaft; a bearing assembly, comprising a front end bearing assembly and a rear end bearing assembly, configured to support the rotating shaft and to enable high-speed rotation of the shaft within the spindle assembly; a turbine placed in front of the front end bearing assembly, between the front end bearing assembly and the front cover, and operatively connected with the rotating shaft, the turbine configured to rotate the rotating shaft; a hollow housing to mechanically support components of the spindle assembly, the hollow housing may include a plurality of passages to allow flow of high pressure fluid provided by the machining device; and a front cover located in front of the hollow housing, the front cover may include: a first group of passages, fluidly connected to the plurality of passages of the hollow housing, to allow the high pressure fluid to flow from the passages of the hollow housing towards the blades of the turbine and rotate the turbine; a hollow space located substantially at a center of the front cover to provide free space for the blades of the turbine; openings located at the front end of the front cover to allow low pressure fluid to flow from the hollow space out of the spindle assembly; wherein the spindle assembly further comprises a second group of passages extending from behind the blades, between the blades of the turbine and the front end bearing assembly, to the front end of the front cover to allow collection of low pressure fluids that flow towards the rear end of the spindle assembly after hitting the blades of the turbine and to direct these fluids towards the front end of the front cover and out of the spindle assembly, wherein the turbine is placed between the front end bearing assembly and the front cover, and out of the spindle assembly.

Furthermore, according to embodiments of the present invention, the spindle assembly may be configured to be assembled at an internal taper socket of a tool holder, and at least the rear end bearing assembly may be disposed in a part of the spindle assembly which is configured to be situated in a space defined by the taper socket of the tool holder and a front end clamping nut.

Furthermore, according to embodiments of the present invention, the housing may include a rear section configured to be assembled onto the machining device.

Furthermore, according to embodiments of the present invention, the hollow space of the front cover may include a rear section and a front section, wherein the rear section of the hollow space may be configured to provide free space for the turbine blades, the rear section of the hollow space having a diameter larger than the diameter of the turbine, and wherein the front section of the hollow space extends in front of the turbine and has a diameter larger than the diameter of the rear section of the hollow space, to allow collection of fluids after hitting the blades of the turbine;

Furthermore, according to embodiments of the present invention, the front cover may include adjustable sprinklers assembled at the second group of passages and configured to enable adjustable directing of the low pressure fluids exhausted out of the spindle assembly.

Furthermore, according to embodiments of the present invention, each passage of the first group of passages may include a tapered section, wherein a narrow end of the tapered section faces the blades of the turbine.

Furthermore, according to embodiments of the present invention, the openings of the first group of passages towards the blades of the turbine are elliptical.

Furthermore, according to embodiments of the present invention, a pressure surface of the blades is concaved in the radial direction.

Furthermore, according to embodiments of the present invention, a pressure surface of the blades may include a concaved section at a rear end of the blades, proximal to a connection of the blades to a base of the turbine, and a substantially straight section at a front end of the blades, at a distance from the a connection to the base of the turbine, and wherein the first group of passages are configured to inject the high pressure fluids towards the connection line of the concaved section and the straight section.

Furthermore, according to embodiments of the present invention, the turbine may include a base to which the blades are attached at the rear end of the blades, and openings of the second group of passages may face the base.

Furthermore, according to embodiments of the present invention, a gap may be provided between the inner side of the blades of the turbine and the rotating shaft.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
Fig. 1 is a schematic cross section illustration of an exemplary spindle assembly, according to embodiments of the present invention;
Fig. 2A is a front view of a hollow housing of the exemplary spindle assembly, according to embodiments of the present invention;
Fig. 2B is a schematic cross section illustration of the housing along plane BB, according to embodiments of the present invention;
Fig. 3A is a front view of a front cover of the exemplary spindle assembly, according to embodiments of the present invention;
Fig. 3B is a schematic cross section illustration of the front cover along plane DD, according to embodiments of the present invention;
Fig. 3C is a side view of the front cover of the exemplary spindle assembly, according to embodiments of the present invention;
Fig. 3D is a schematic cross section illustration of the front cover along plane JJ, according to embodiments of the present invention;
Fig. 3E is an enlarged view of encircled area K of the schematic cross section illustration of the front cover of Fig. 3D, according to embodiments of the present invention;
Fig. 4A is a 3D illustration of a turbine of the exemplary spindle assembly, according to embodiments of the present invention;
Fig. 4B is a front view of the turbine, according to embodiments of the present invention;
Fig. 4C is a schematic cross section illustration of the turbine along plane AA, according to embodiments of the present invention;
Fig. 4D is an enlarged view of encircled area B of the schematic cross section illustration of the turbine of Fig. 4B, according to embodiments of the present invention;
Fig. 5 is a schematic partial isometric cross section illustration of the spindle assembly, according to embodiments of the present invention;
Fig. 6A is a 3D illustration of the turbine and the rotating shaft, according to embodiments of the present invention;
Fig. 6B is a front view of the turbine and the rotating shaft, according to embodiments of the present invention;
Fig. 7 is a schematic cross section illustration of the exemplary spindle assembly according to embodiments of the present invention, assembled on a tool holder and secured by a front clamping nut;
Fig. 8 is a schematic cross section illustration of a spindle assembly with adjustable sprinklers, according to embodiments of the present invention;
Fig. 9A is a 3D illustration of a front cover of the spindle assembly of Fig. 8 according to embodiments of the present invention;
Fig. 9B is a front view of the front cover of Fig. 9A according to embodiments of the present invention;
Fig. 9C is a schematic cross section illustration of the front cover of Fig. 9A along plane DD, according to embodiments of the present invention;
Fig. 9D which is an enlarged view of encircled area J of the schematic cross section illustration of the front cover of Fig. 9C, according to embodiments of the present invention;
Fig. 10A is a 3D illustration of the turbine the of spindle assembly of Fig. 8, according to embodiments of the present invention;
Fig. 10B is a front view of the turbine the of spindle assembly of Fig. 8, according to embodiments of the present invention;
Fig. 10C is a schematic cross section illustration of the turbine the of spindle assembly of Fig. 8 along meridional plane CC, according to embodiments of the present invention.
Fig. 11 is a 3D illustration of the of spindle assembly of Fig. 8 , according to embodiments of the present invention;
Fig. 12 is a schematic cross section illustration of a build-in spindle assembly, according to embodiments of the present invention; and
Fig. 13 is a schematic partial isometric cross section illustration of the build-in spindle assembly of Fig. 12, according to embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF EMBODIMENTS OF THE PRESENT INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

Although embodiments of the present invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like.

According to embodiments of the present invention, a spindle assembly may be configured to be assembled at an internal taper socket of a tool holder of a main spindle of a machining device. Throughout the present application, the term "main spindle" may refer to a spindle integral to the machining device. Thus, the spindle assembly according to embodiments of the present invention may be installed instead of a tool at the tool holder of the main spindle of the machining device. According to some embodiments, the housing of the spindle assembly may include a rear section configured to be assembled onto the machining device, eliminating the need for using a separate tool holder.

The spindle assembly is designed so that when the spindle assembly is mounted on a tool holder, the spindle assembly may be disposed or situated in a space defined by the taper socket of the tool holder and the front clamping nut. The spindle assembly may be divided to a first part and a second part along the longitudinal dimension of the spindle assembly. For example, at least half of the longitudinal dimension of the spindle assembly according to embodiments of the present invention may be disposed or situated in a space defined by the taper socket of the tool holder and a front end clamping nut when the spindle assembly is mounted on a tool holder. According to embodiments of the present invention, the first part of the spindle assembly includes at least the rear end bearing assembly of the spindle.

The main components of a spindle assembly according to embodiments of the invention may include a housing and a front cover, a rotating shaft configured for rotation within the housing and the tool holder about a rotation axis R, a bearing assembly configured to radially and axially support the rotating shaft within the spindle assembly and to enable high-speed rotation of the shaft, and a turbine placed in front of the front end bearing assembly operatively connected with the rotating shaft. The turbine may be configured to rotate the rotating shaft in response to a flow of fluid, such as high pressure coolant fluid supplied by the machining device through the spindle assembly. The housing and the front cover may include a plurality of passages configured to allow high pressure coolant fluid flowing from the machining device through the spindle assembly to drive the turbine. At least one bearing, for example, the rear end bearing assembly of the spindle, is situated or disposed in the cone shaped cavity being the space defined by the socket of the tool holder and the front clamping nut. The socket of the tool holder may be tapered having a cone shape.

Spindles according to embodiments of the present invention may reach rotation speed of, for example, 40 Krpm with moment of 0.2 Nm. However, spindles according to embodiments of the present invention may reach higher or lower rotation speeds, and other magnitudes of moments. It should be noted that when working with spindles according to some embodiments of the present invention, the main spindle of the machining device typically does not rotate. This may eliminate superposition of tolerance errors, due to cumulative effects of tolerances in the tool holder and in the spindle, and improve the overall accuracy of the spindle performance. Embodiments of the invention, however, are not limited in this regard; hence, according to some embodiments, the main spindle of the machining device may rotate together with the spindle thus reaching high working speed which is the algebraic sum of the particular rotation speeds of the main spindle and a spindle according to embodiments of the invention.

Rotation axis R may be a longitudinal axis, central to the spindle assembly and to the tool holder. Terms used throughout the present application to describe location of elements in spindles according to embodiments of the present invention, are made relative to a tool clamping system of the spindle assembly according to embodiments of the present invention, along rotation axis R. A forward or front direction refers to the direction of the tool clamping system or may have a meaning of proximal to that tool clamping system. Similarly an opposite rear direction refers to the reverse direction, the end of the spindle opposite to the tool clamping system, or may have a meaning of proximal to the end opposite to the tool clamping system. Similarly, the terms "before" or "in front" may relate to an element placed closer to the tool clamping system along rotation axis R with relation to another element, and the term "behind" may relate to an element placed further away from the tool clamping system along rotation axis R with relation to another element.

According to embodiments of the present invention, the tool holder may be a standard tool holder such as BT30, BT40, BT50, CAT40, CAT50, HSK-A, HSK-E, HSK-F, ISO 26623, etc., or a propriety tool holder. A rear taper end of the tool holder may enable secured mounting on a machining device (not shown), such as a lathe milling machine, drilling machine, etc. The internal taper socket of a tool holder may conform and obey to any known relevant standard relating to attachment of a spindle to a rotating tool holder. For example, the internal taper socket of a tool holder may conform to ER40 or to ER32, TG100, SC, R8, MT2 collets standards.

According to embodiments of the present invention, the turbine of the spindle may be operatively connected with the rotating shaft. The turbine may be mounted on the rotating shaft using any suitable technique such as screwing, gluing etc. Alternatively, the turbine and the shaft may be provided as one piece. The turbine may be an impulse turbine, a reaction turbine, or any combination thereof. The turbine may be located at a front end of the shaft, between the front end bearing and the tool clamping system

According to embodiments of the present invention, the bearing assembly may include a front end bearing assembly and a rear end bearing assembly. Each of the front end bearing assembly and a rear end bearing assembly may include one or more bearings. The bearing assembly may include any type of bearing that supports both radial and axial loads. The tolerance of the bearing assembly may range from low precision, such as ABEC 1 class of the ABEC scale or normal class 6X of the ISO 492 standard, up to high precision, such as ABEC 9P class of the ABEC scale or normal class 2 of the ISO 492 standard. For example, the bearing assembly may include ball bearing such as deep groove ball bearing, angular contact ball bearing, four point contact ball bearing, ceramic bearings or magneto bearings. Bearings with snap ring groove, contact sealed type, non contact sealed type, shielded type or open type bearing, may be used, based on specific design requirements.

The front end bearing assembly and the rear end bearing assembly may be mounted in back to back (BTB), face to face (FTF) or tandem configurations.

Bearing preload may be achieved by any suitable preload technique. Preload is intended to eliminate clearances in both axial and radial direction by applying load to push the bearing such that the bearing is secured to the bearing rail. For example, the front end bearing and rear end bearing may be preloaded using constant pressure technique. For example, bearing preload may be achieved using a spring that applies consistent (constant) pressure to front end bearing assembly and rear end bearing assembly against a rigid stopper element such as a preload screw, a screw-nut, the turbine etc. Any type of suitable spring, such as O-rings, coil springs, Belleville springs, wave springs and/or finger springs may be used for preloading front end bearing assembly and rear end bearing assembly. Depending on the configuration of front end bearing assembly and a rear end bearing assembly, preload may be applied on either the inner or the outer rails of front end bearing assembly and a rear end bearing assembly. Alternatively, positioning preloading may be used as well. Positioning preload may be achieved by mechanically locking the front end bearing end rear end bearing in position while under axial load.

The high pressure fluid may be any fluid supplied by the machining device the tool holder is attached to, such as coolant fluid. Typically, the coolant fluid is an emulsion of about 95% water and 5% oil. The high pressure coolant fluid is typically supplied by the machining device at a pressure of 12 Bar, and may reach 90 Bar or more, as supplied by the machining device.

According to embodiments of the present invention, special care should be taken for fluid exhaust after being used for driving the turbine. For example, fluid exhaust may include openings provided at a front end of the spindle assembly, the openings allowing the fluid to flow away from the spindle. Additionally, a second group of passages may be provided, extending from behind the turbine to the front end of the spindle assembly to allow collection of fluids that flow towards the rear end of the spindle assembly after hitting the blades of the turbine and to direct these fluids out of the spindle assembly. In addition, a hollow space that provides free space for the turbine blades may extend in diameter in front of the turbine, to allow collection of fluids after hitting the blades of the turbine.

Embodiments of the present invention are not limited to a specific tool clamping system, or to a specific tool. Any suitable tool such as any cutting tool, grinding tool honing tool etc., may be mounted on spindle assemblies according to embodiments of the present invention. Additionally, any suitable tool clamping system and technique may be used, such as a clamping collet, Heat Shrink clamping, elastic deformation clamping, hydraulic or Nickel-Titanium (Nitinol) - shape memory alloy (NiTi) clamping, etc. Similarly, embodiments of the present invention are not limited to any specific rotor retention method used for preventing rotation of the spindle shaft while assembling and disassembling tools. For example, preparations for rotor retention such as two flat areas (suitable for a flat key), a plurality of holes, six flat areas, special slots etc, may be included in the spindle. As used herein, rotor may refer to the rotating parts of the spindle, such as the shaft and the parts attached to the shaft.

Embodiments of the present invention may include means for measuring the rotation speed of the shaft. Any suitable rotation speed measurement method and technique may be used. For example, a magnet may be mounted on the rotating shaft and rotation speed measuring system including a Hall Effect sensor may be used for rotation speed measurement.

Embodiments of the present invention will now be demonstrated by way of exemplary designs. It should be noted that the current invention is not limited to the specific examples shown, and that implementations of the principles described herein may vary as may be required to meet specific design requirements.

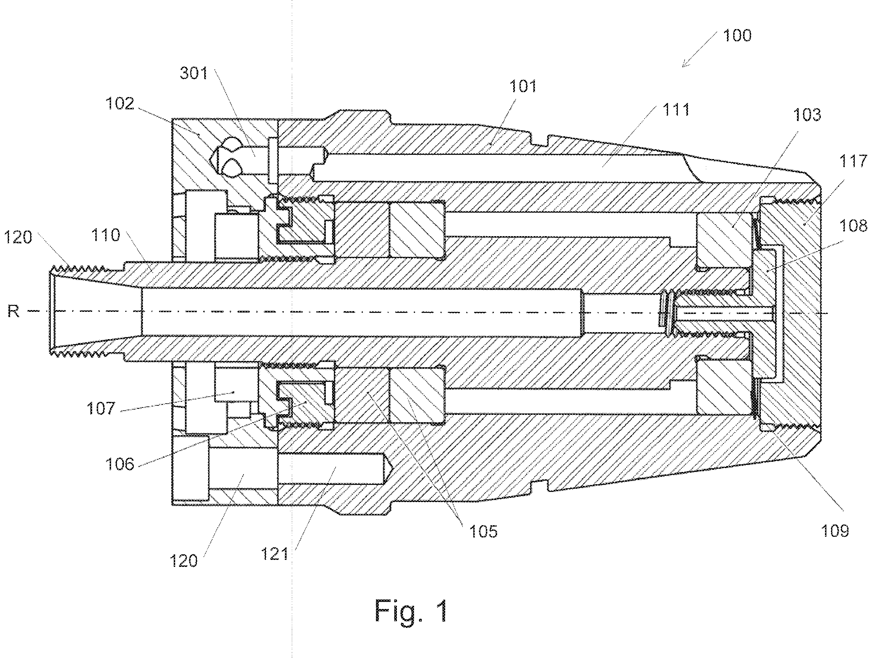

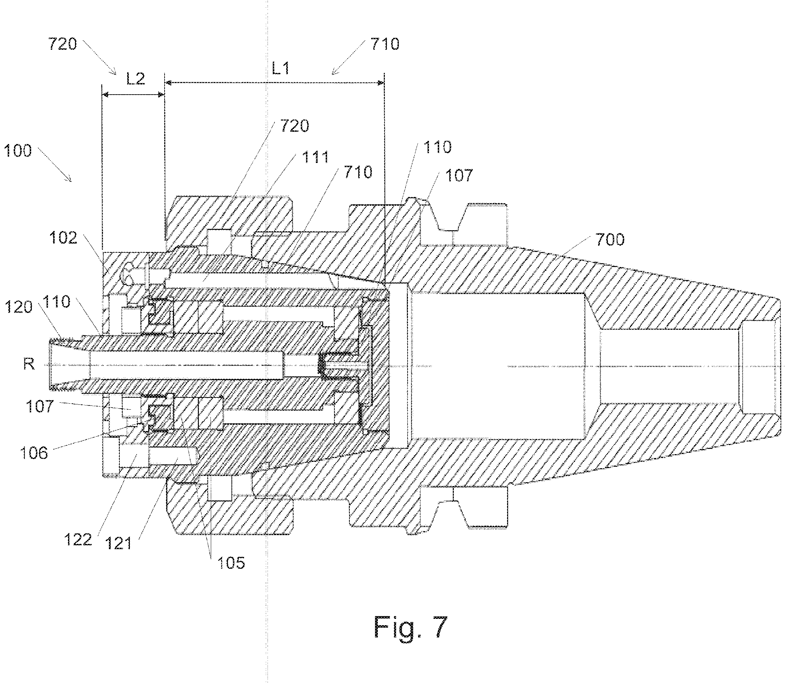

Reference is made to Fig. 1, which is a schematic cross section illustration of an exemplary spindle assembly 100, according to embodiments of the present invention. According to embodiments of the present invention spindle assembly 100 may be configured to be assembled at an internal taper socket (e.g., socket 710 in Fig. 7) of a tool holder (e.g., tool holder 700 in Fig. 7). Tool holders such as tool holder 700 are made according to a standard and are widely spread. Thus, many users that already own tool holders may have to buy only spindle assembly 100 that may fit to an existing tool holder.

A rear end and a front end are defined for spindle assembly 100, with the front end being proximal to a tool clamping system 120 of spindle assembly 100, and the rear end opposite to tool clamping system 120. Spindle assembly 100 may include a rotating shaft 110, a bearing assembly 103, 105, a turbine 107, a hollow housing 101 and a front cover 102. The rear end of spindle assembly 100 may include rear cover 117 and bolt 108, and the front end may include a front nut 106. It should be noted that embodiments of the present invention are not limited to specific tool clamping arrangement and method and that any suitable tool clamping arrangements and techniques, such as shrink, hydraulic or shape memory allow unit, may be used.

Rotating shaft 110 may be configured for rotation within hollow housing 101 and the tool holder over rotation axis R. Bearing assembly 103, 105 may include a front end bearing assembly 105 and a rear end bearing assembly 103, configured to radially and axially support rotating shaft 110 within housing 101 and tool holder 700 (depicted in Fig. 7) and to enable high-speed rotation of rotating shaft 110 within the tool holder. According to some embodiments of the present invention, at least rear end bearing assembly 103 may be disposed in a part of spindle assembly 100 which is configured to be situated in a space defined by taper socket 710 of the tool holder 700 and front end clamping nut 720.

Turbine 107 may be placed in front of front end bearing assembly 105 and may be operatively connected with rotating shaft 110 so as to rotate rotating shaft 110. According to embodiments of the present invention, it is not desirable to let fluids from the machining device reach rear end and front end bearing assemblies 103,105. It has been found that the service life of rear end and front end bearing assemblies 103,105 is shortened even if a small amount of these fluids reach the bearings. Placing turbine 107 in front of front end bearing assembly 105 enables the design of an efficient fluid exhaust system that prevents substantially any flow of machine fluids into the bearings. The fluid exhaust system will be described in detail herein.

Front end bearing assembly 105 and rear end bearing assembly 103 may each include one or more bearings. The bearings may include angular contact ball bearing, or other suitable types of bearing. Front end bearing 105 and rear end bearing 103 may be installed in back-to-back (BTB) configuration, or alternatively, in either face to face (FTF) or tandem configurations, as is known in the art. The specific type of installation of front end bearing 105 and rear end bearing 103 with respect to each other may be selected to meet specific design requirements.

Front end bearing 105 and rear end bearing 103 may be preloaded with pressure by using constant pressure technique, for example, rear cover 117 and bolt 108 may apply consistent pressure via wave spring 109 to front end bearing 105 and rear end bearing 103 against front nut 106. Other types of springs, such as coil springs, Belleville springs, O-ring, and finger springs may be used for preloading front end bearing 105 and rear end bearing 103.

Front cover 102 may be located in front of hollow housing 101 and may be connected to hollow housing 101 by any applicable means, for example, using screws or pins inserted to matching bores 122, 121. It should be noted that hollow housing 101 and front cover 102 are described herein as two separate parts manly due to manufacturing considerations of machining processes. However embodiments of the present invention are not limited in this regard. Hollow housing 101 and front cover 102 may be manufactured as a single piece, for example using molding techniques or three dimensional (3D) printing. Front cover 102 will be discussed in detail hereinbelow.

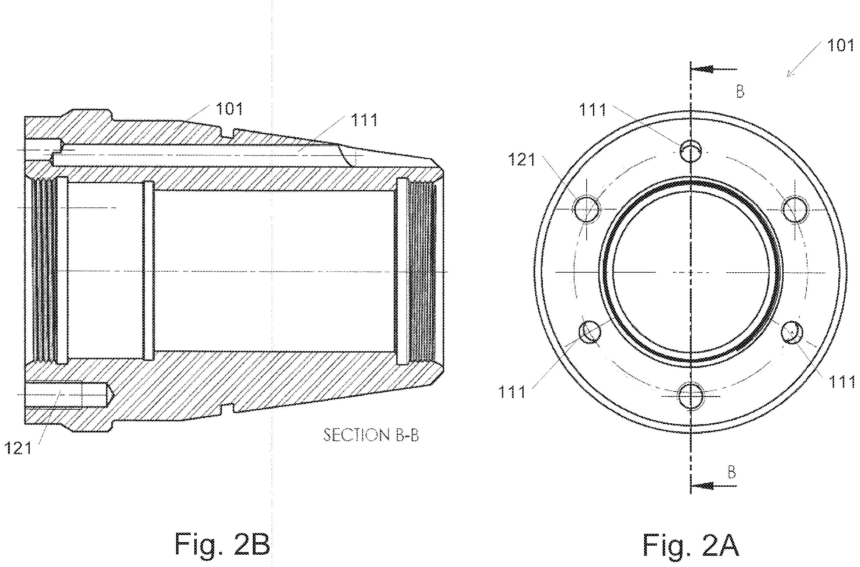

Reference is now made to Fig. 2A which is a front view of hollow housing 101 of spindle assembly 100, according to embodiments of the present invention, and to Fig. 2B which is a schematic cross section illustration of hollow housing 101 along plane BB, according to embodiments of the present invention.

Hollow housing 101 may mechanically support the components of spindle assembly 100. Hollow housing 101 may include a plurality of internal passages 111 to allow high pressure fluid to flow from the tool holder towards passages 301 at front cover 102. In the example depicted in Fig. 2A there are three internal passages 111. Embodiments of the present invention are not limited to a specific number of passages 111 and the number of passages may vary to fit design considerations.

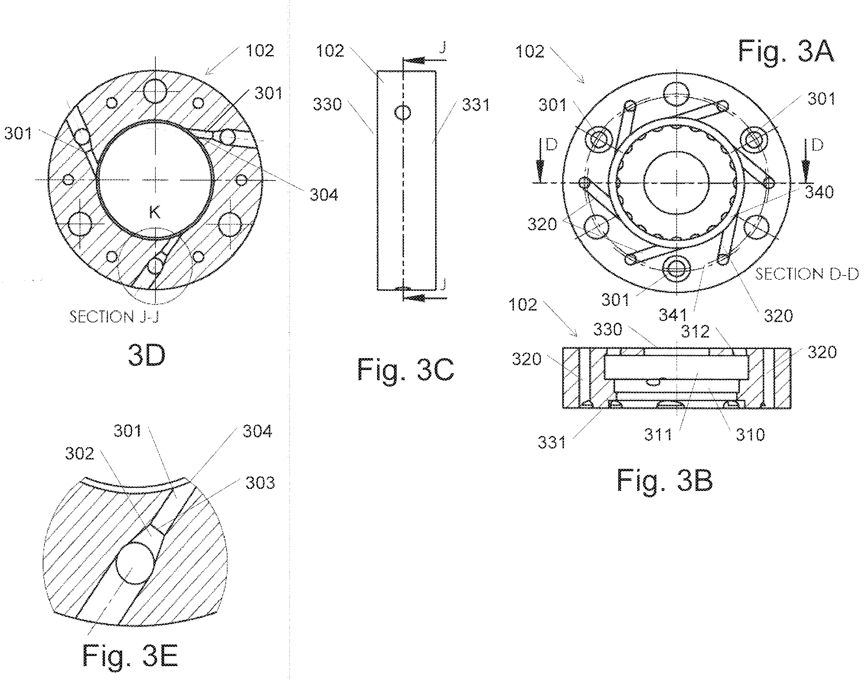

Reference is now made to Fig. 3A which is a front view of front cover 102 of spindle assembly 100 according to embodiments of the present invention, to Fig. 3B which is a schematic cross section illustration of front cover 102 along plane DD, to Fig. 3C which is a side view of front cover 102, to Fig. 3D which is a schematic cross section illustration of front cover 102 along plane JJ, and to Fig. 3E which is an enlarged view of encircled area K of the schematic cross section illustration of the front cover of Fig. 3D.

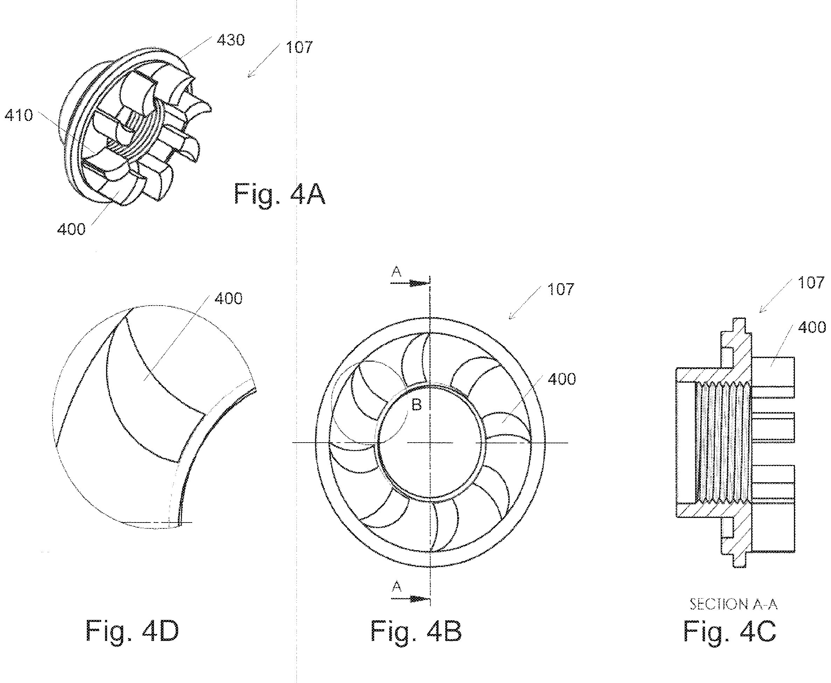

Front cover 102 may include a plurality high pressure passages 301 which are fluidly connected to the plurality of internal passages 111 of hollow housing 101, to allow high pressure fluid to flow from internal passages 111 of hollow housing 101 towards blades 400 (depicted in Fig. 4) of turbine 107 and rotate turbine 107. According to embodiments of the present invention, high pressure passages 301 may include a tapered section 302, wherein a narrow end 303 of tapered section 302 faces turbine 107. The diameter of narrow end 303 may be adjusted to control the speed and pressure of the fluid flow, which together with other parameters, such as the size of turbine 107, may control the speed of rotation and moment. According to embodiments of the present invention, the openings 304 of the first group of passages 301 towards the blades 400 of the turbine 107 are elliptical. Embodiments of the present invention are not limited to a specific number and configuration of high pressure passages 301, however their number should equal the number of internal passages 111 of hollow housing 101, and their location should correspond to the location of internal passages 111 of hollow housing 101, so that they will be fluidly connected or create a single channel. Any passages design that may enable high pressure fluid to reach turbine 107 with sufficient speed and pressure, and at appropriate angle to rotate turbine 107 at desired speed and moment may be utilized. For example, fluid injection openings 304 of passages 301 may be horizontal, i.e. parallel to plane JJ or may be disposed with an angle with relation to plane JJ and to blades 400 of turbine 107.

According to some embodiments of the present invention, a horizontal section of passages 301 may be drilled from an outer circumference of front cover 102. Thus, passages 301 may be sealed at the outer circumference of front cover 102, by any applicable manner, for example, using a bolt or a screw.

A hollow space 310, 311 may be located substantially at a center of front cover 102. The hollow space may have a rear section 310 to provide space for the turbine blades 400. Thus, the diameter of rear section 310 of the hollow space may be sufficiently larger than the diameter of turbine blades 400 to allow free rotation of turbine blades 400 within rear section 310 of the hollow space. The hollow space may extend toward front end 330 of front cover 102 into a front section 311. Front section 311 may be situated substantially in front of turbine 107. Front section 311 may have a diameter larger of the diameter of rear section 310 of the hollow space, to allow collection of fluids after hitting blades 400 of turbine 107. The pressure of the fluid after hitting blades 400 of turbine 107 may be considerably lower than before hitting blades 400, thus after hitting blades 400 of turbine 107 the fluid may be referred to herein as low pressure fluid.

Front cover 102 may include fluid exhaust system including front openings 312 and rear exhaust passages 320. Openings 312 may be located at front end 330 of front cover 102 to allow low pressure fluid to flow from front section 311 of the hollow space out of spindle assembly 100. According to some embodiments of the present invention, openings 312 may allow the fluid to flow towards a working point of a tool mounted on spindle assembly 100. Jets or sprinklers may be provided at openings 312 to direct, at least some of the fluid leaving the turbine area towards the working point of the tool, thus cooling and removing debris from the working point. Openings 312 may be pointed at an angle towards the working point. The working point of a tool may be the point or area of contact of a tool with a work piece.

Inventors of the present invention have found that front openings 312 may not suffice for complete fluid exhaust. The inventors have noticed that a some fluid flows towards the rear end of spindle assembly 100 after hitting blades 400 of turbine 107. The rear flowing fluids may enter front end bearing assembly 105 and rear end bearing assembly 103 and cause damage to these bearings. Therefore, according to embodiments of the present invention, front cover 102 may include rear exhaust passages 320 extending from behind turbine 107 to front end 330 of front cover 102 to allow collection of low pressure fluids that flow towards the rear end of spindle assembly 100 after hitting blades 400 of turbine 107, and to direct these fluids towards front end 330 of the front cover 102 and out of spindle assembly 100.

For example, rear exhaust passages 320 may extend, along rear end 331 of front cover 102 from an inner diameter 340 of front cover 102, located proximal to a base 430 of turbine 107, towards a mid-circle 341 of rear end 331, and from there at a substantially strait tunnel from rear end 331 to front end 330 of front cover 102.

Reference is made to Fig. 4A which is a 3D illustration of turbine 107 of spindle assembly 100, according to embodiments of the present invention, to Fig. 4B which is a front view of turbine 107, to Fig. 4C which is a schematic cross section illustration of turbine 107 along meridional plane AA, and to Fig. 4D which is an enlarged view of encircled area B of the schematic cross section illustration of the turbine of Fig. 4B. Turbine 107 has 8 wings 400. Blades 400 of turbine 107 may be vertical. i.e., parallel to meridional plane AA. Thus, if fluid injection openings 304 of passages 301 are horizontal the fluid may hit blades 400 at a right angle, with maximal power, to rotate turbine 107. After hitting blades 400 of turbine 107, the fluid may spread to all directions inside hollow space 310, 311 of front cover 102, and exhausted from spindle assembly 100 through the exhaust system of front cover 102. It should be noted that embodiments of the present invention are not limited to the specific design of turbine 107 in combination with passages 301. For example, other number of blades 400 and/or passages 301 may be used. Additionally or alternatively, blades 400 may have an angel with respect to plane AA and/or passages 301 may have an angle with respect to plain JJ. Blades 400 may be assembled on a base 430 having an outer circumference corresponding to an inner circumference of a rear end 331 of front cover 102, so that, when spindle assembly 100 is assembled, base 430 may fit into rear end 331 of front cover 102, and openings of passages 320 may face base 430, between blades 400 and front end bearing assembly 105, to collect fluids that flow towards the rear end of spindle assembly 100.

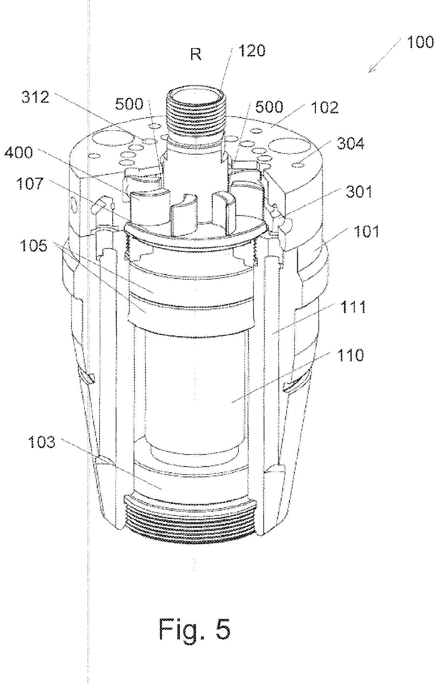

Reference is now made to Fig. 5 which is a schematic partial isometric cross section illustration of spindle assembly 100, according to embodiments of the present invention. This view provides clear presentation of the relative location of the various parts of spindle assembly 100. In this view another feature of embodiments of the present invention is presented. According to embodiments of the present invention a gap 500 may be provided between the inner side of blades 400 of turbine 107 and rotating shaft 110. Gap 500 may be in the range of 1 mm or below for spindle assemblies that are designed for standard tool holders such as BT40 or HSK40. Gaps 500 may provide pathways to fluids that are spread towards the center of spindle assembly 100 and thus may aid with the exhaust of the fluid and enable smooth rotation of turbine 107. However, gaps 500 may decrease the moment of turbine 107, therefore, gap 500 may be eliminated.

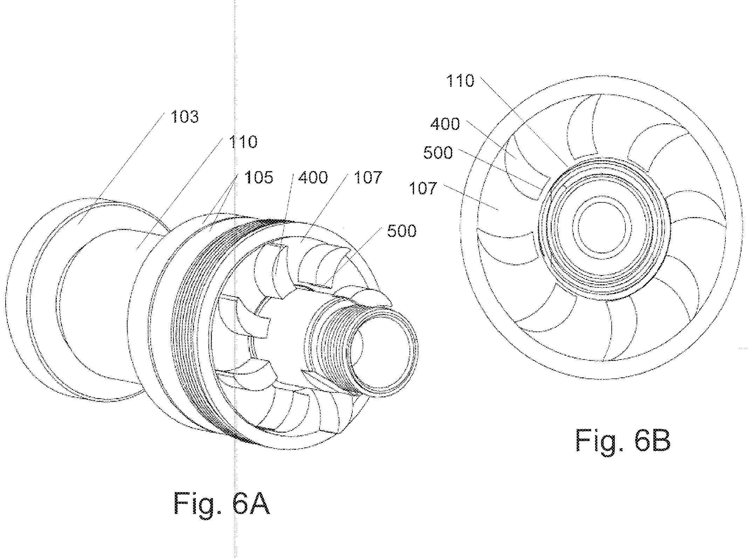

Reference is made to Fig. 6A which is a schematic partial isometric cross section illustration of turbine 107 and rotating shaft 110, according to embodiments of the present invention, again presenting gap 500 that is formed between blades 400 of turbine 107 and rotating shaft 110. Shaft 110 may be operatively connected with turbine 107, such that rotation of turbine 107 may rotate rotating shaft 110. For example, turbine 107 may be may be mechanically connected to shaft 110 by screwing, gluing, soldering or any other applicable method, or, turbine 107 and rotating shaft 110 may be made as one piece using any applicable manufacturing method, e.g., using molding techniques or 3D printing.

Reference is made to Fig. 7 which is a schematic cross section illustration of exemplary spindle assembly 100 according to embodiments of the present invention, assembled on a tool holder 700 and secured by a front clamping nut 720.

Spindle assembly 100 may be divided to a first part 710 having a longitudinal dimension denoted L1 and a second part 720 having a longitudinal dimension denoted L2, along the longitudinal dimension of spindle assembly 100. Spindle assembly 100 is designed so that when spindle assembly 100 is mounted on tool holder 700, a first part of spindle assembly 100 is disposed or situated in a space defined by a taper socket 710 of tool holder 700 and front clamping nut 720. According to embodiments of the present invention, the first part of spindle assembly 100 may include at least rear end bearing 103. Hence, at least rear end bearing 103 may be disposed in the cone shaped cavity being the space defined by the inner surface of taper socket 710 of tool holder 700 and the front clamping nut 720.

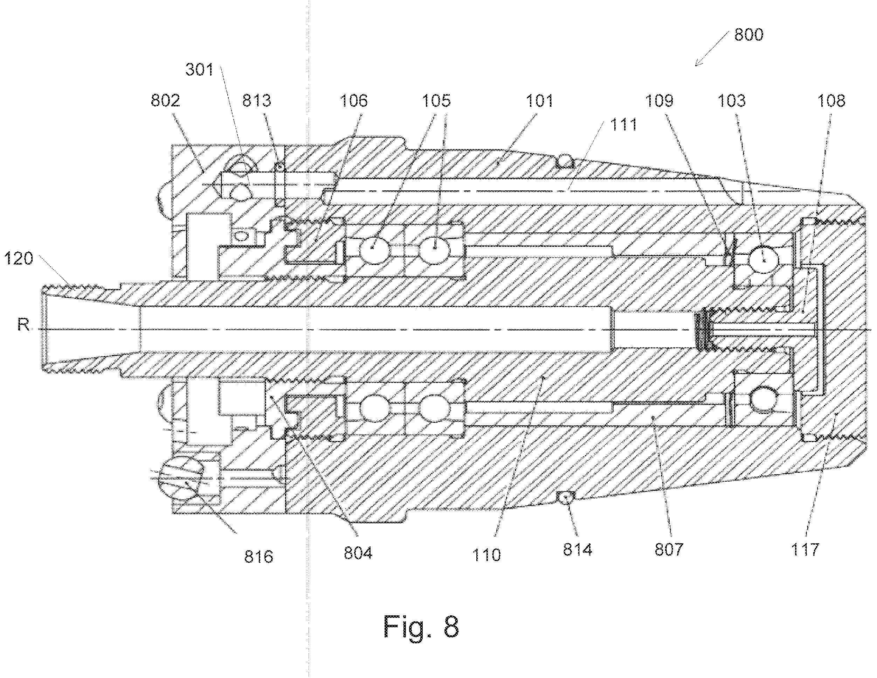

Reference is made to Fig. 8 which is a schematic cross section illustration of a spindle assembly 800 with adjustable sprinklers 816, according to embodiments of the present invention. Components of spindle assembly 800 that are the same as corresponding elements of spindle assembly 100 are given the same reference numerals, and the description of these elements, given with reference to spindle assembly 100, is relevant for spindle assembly 800 as well. According to embodiments of the present invention, spindle assembly 800 may be configured to be assembled at an internal taper socket (e.g., socket 710 in Fig. 7) of a tool holder (e.g., tool holder 700 in Fig. 7). A rear end and a front end are defined for spindle assembly 800, with the front end being proximal to a tool clamping system 120 of spindle assembly 800, and the rear end opposite to tool clamping system 120. Spindle assembly 800 may include a rotating shaft 110, bearing assemblies 103, 105, a turbine 804, a hollow housing 101 and a front cover 802. The rear end of spindle assembly 800 may include rear cover 117 and bolt 108, and the front end may include a front nut 106. It should be noted that embodiments of the present invention are not limited to specific tool clamping arrangement and method and that any suitable tool clamping arrangements and techniques, such as shrink, hydraulic or shape memory allow unit, may be used.

Fig. 8 also depicts optional O-ring 814 assembled at a dedicated recess at the outer circumference of hollow housing 101, and O-ring 813 assembled around high pressure passages 301 at the connection point of hollow housing 101 and front cover 102. O-rings 814, 813 may be provided to prevent leakage of high pressure fluids.

Rotating shaft 110 may be configured for rotation within hollow housing 101 and the tool holder over rotation axis R. Bearing assemblies 103, 105 may include front end bearing assembly 105 and rear end bearing assembly 103, configured to radially and axially support rotating shaft 110 within housing 101 and tool holder 700 (depicted in Fig. 7) and to enable high-speed rotation of rotating shaft 110 within the tool holder. According to some embodiments of the present invention, at least rear end bearing assembly 103 may be disposed in a part of spindle assembly 100 which is configured to be situated in a space defined by taper socket 710 of the tool holder 700 and front end clamping nut 720.

Turbine 804 may be placed in front of front end bearing assembly 105 and may be operatively connected with rotating shaft 110 so as to rotate rotating shaft 110. For example turbine 804 may be mechanically connected to rotating shaft 110 by screwing, gluing, soldering or any other applicable method, or turbine 804 and rotating shaft 110 may be made in a single piece using any applicable manufacturing method, e.g., using molding techniques or 3D printing.

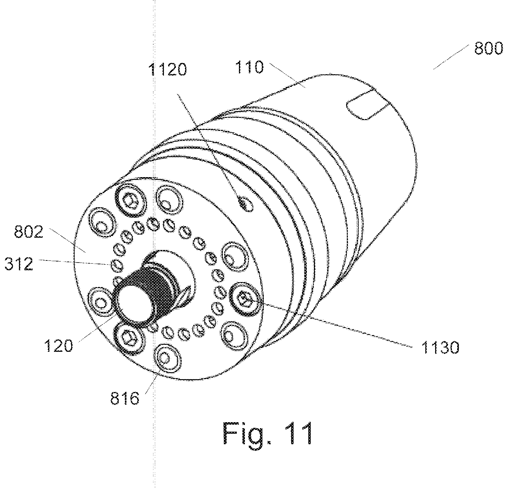

Front cover 802 may be located in front of hollow housing 101 and may be connected to hollow housing 101 by any applicable means, for example, using screws or pins 1130 (depicted in Fig. 11) inserted to matching bores similarly to front cover 102. It should be noted that hollow housing 101 and front cover 802 are described herein as two separate parts manly due to manufacturing considerations of machining processes. However embodiments of the present invention are not limited in this regard. Hollow housing 101 and front cover 802 may be manufactured as a single piece, for example using molding techniques or 3D printing. Front cover 802 will be discussed in detail hereinbelow. A sleeve 807 may be situated between rotating shaft 110 and hollow housing 101, to support bearings 103 and 105.

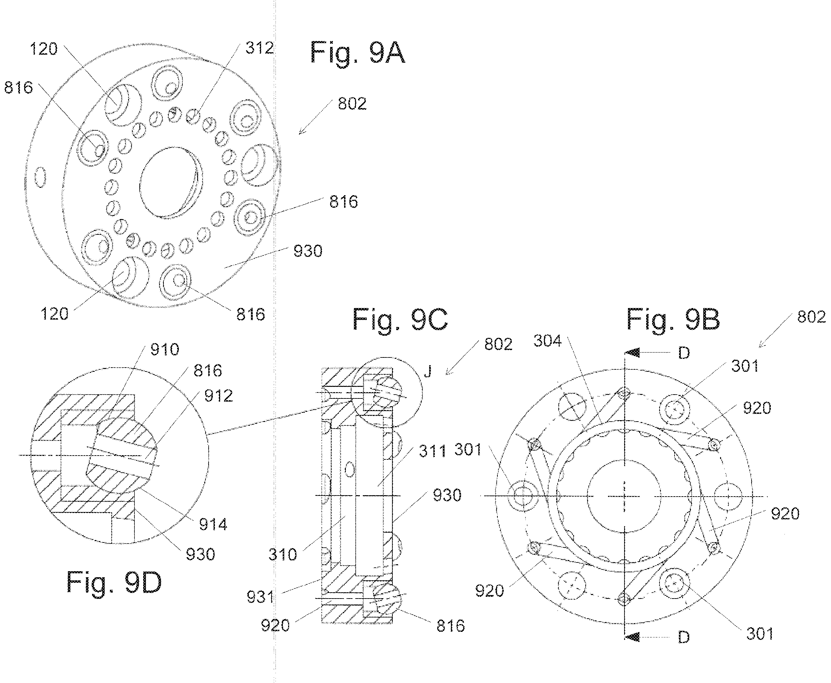

Reference is now made to Fig. 9A which is a 3D illustration of front cover 802 of spindle assembly 800 according to embodiments of the present invention, to Fig. 9B which is a front view of front cover 802, to Fig. 9C which is a schematic cross section illustration of front cover 802 along plane DD, and to Fig. 9D which is an enlarged view of encircled area J of the schematic cross section illustration of the front cover of Fig. 9C. Elements of front cover 802 that are the same as corresponding elements of front cover 102 are given the same reference numerals, and the description of these elements given with reference to front cover 102 is relevant for front cover 802 as well.

According to embodiments of the present invention, rear exhaust passages 920 of front cover 802 may include adjustable sprinklers 816 located near front end 930 of front cover 802. Adjustable sprinklers 816 may have the general shape of a sphere 914 with central tunnel 912. Sphere 914 may be placed in a corresponding niche 910 provided near front end 930 of front cover 802. Sphere 914 may slide within niche 910 to a direct central tunnel 912 to a desired direction. For example, the operator of the machining device may adjust the direction of injection of adjustable sprinklers 816 towards the working point of the specific tool that is installed on spindle assembly 800. If the tool is replaced and the working point is changed, the operator may adjust the direction of injection of adjustable sprinklers 816 towards the new working point by sliding sphere 914 inside niche 910. Adjustable sprinklers 816 may remain in place during operation of spindle assembly 800 due to the friction between sphere 914 and niche 910.

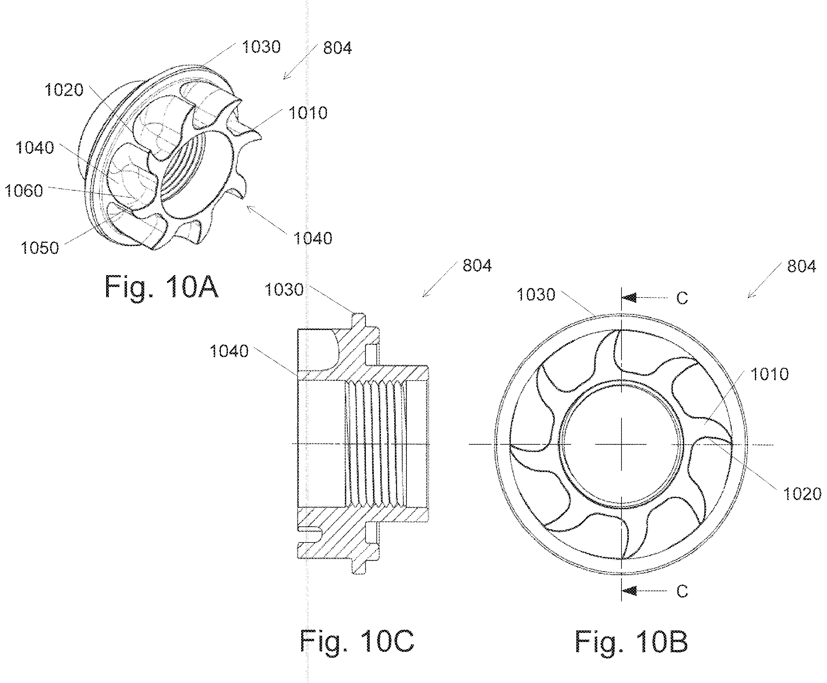

Reference is made to Fig. 10A which is a 3D illustration of turbine 804 of spindle assembly 800, according to embodiments of the present invention, to Fig. 10B which is a front view of turbine 804, to Fig. 10C which is a schematic cross section illustration of turbine 107 along meridional plane CC. Turbine 804 has eight blades 1010. Blades 1010 of turbine 804 may be vertical. i.e., substantially parallel to meridional plane CC. After hitting blades 1010 of turbine 804, the fluid may spread to all directions inside hollow space 310, 311 of front cover 802, and exhausted from spindle assembly 800 through the exhaust system of front cover 802. It should be noted that embodiments of the present invention are not limited to the specific design of turbine 804 in combination with passages 301. For example, other number of blades 1010 and/or passages 301 may be used.

The surface which faces the injected fluids will be referred to herein as pressure surface. Pressure surface 1020 of the blades 1010 may be concaved in the radial direction. A vertical direction is defined herein as the direction from base 1030 of turbine 804 towards the front end of turbine 804. In the vertical direction the pressure surface of the blades 1010 may include a concaved section 1040 at a rear end of blades 1010, proximal to a connection of the blades to base 1030 of turbine 804, and a substantially strait section 1050 at a front end of blades 1010, at a distance from the a connection to base 1030 of turbine 804. According to some embodiments of the present invention, the first group of passages 301 may be configured to direct the center of the stream of the high pressure fluids substantially towards a connection line 1060 of concaved section 1040 and straight section 1050.

Blades 1010 may be located on a round base 1030 having an outer circumference corresponding to an inner circumference of a rear end 1031 of front cover 802, so that base 1030 may fit into rear end 931 of front cover 802, and that opening of passages 920 may be located substantially facing base 1030, between blades 1010 and front end bearing assembly 105, to collect fluids that flow towards the rear end of spindle assembly 800.

Reference is now made to Fig. 11 which is a 3D illustration of spindle assembly 800 including front cover 802 with adjustable sprinklers 816. Fig. 11 depicts screws or pins 1130 inserted to matching bores 122, 121 of front cover 802 and hollow housing 101, respectively, to connect front cover 802 to hollow housing 101, and screws 1120 used to seal passages 301.

It should be noted that spindle assemblies 100 and 800 may include any combination of front covers 102, 802 and turbines 107, 804. For example, each of spindle assemblies 100, 800 may include front cover 102 together with turbines 804 or front cover 802 together with turbines 107.

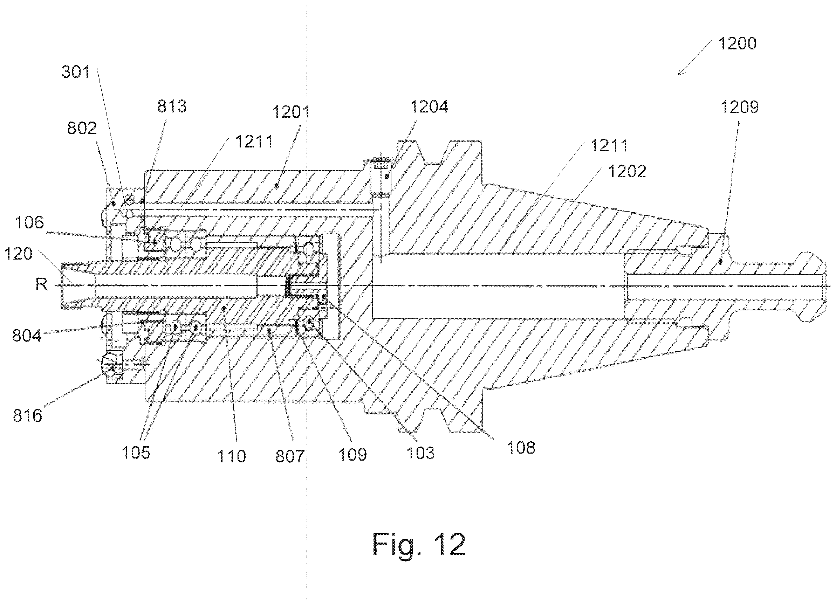

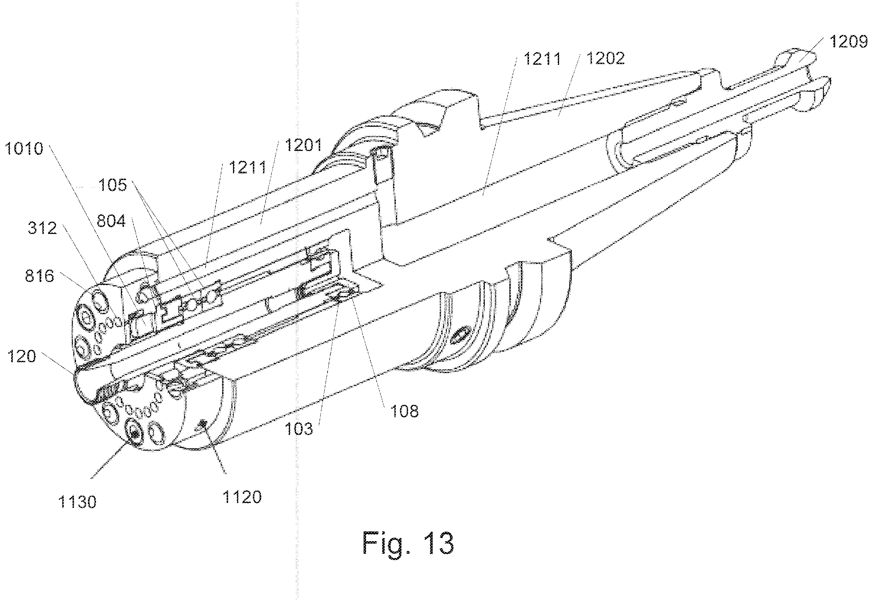

Reference is made to Fig. 12 which is a schematic cross section illustration of a build-in spindle assembly 1200, and to Fig. 13 which is a schematic partial isometric cross section illustration of the build-in spindle assembly of Fig. 12, according to embodiments of the present invention. Components of spindle assembly 1200 that are the same as corresponding components of spindle assemblies 100 and 800 are given the same reference numerals, and the description of these components given with reference to spindle assemblies 100 and 800 is relevant for spindle assembly 1200 as well. Also, spindle assembly 1200 may include any combination of front covers 102, 802 and turbines 107, 804. For example, spindle assembly 1200 may include front cover 102 together with turbines 107, front cover 802 together with turbines 107, front cover 102 together with turbines 804 and front cover 802 together with turbines 804.

According to embodiments of the present invention, housing 1201 of spindle assembly 1200 includes a rear section 1202 configured to be assembled onto the machining device, eliminating the need for using a separate tool holder. Rear section 1202 may conform to any applicable standard of tool holders such as BT30, BT40, BT50, CAT40, CAT50, HSK-A, HSK-E, HSK-F, ISO 26623, etc.

Housing 1201 may include internal passages 1211 to allow high pressure fluid to flow from the machining device towards passages 301 of front cover 802. Fig. 12 depicts also pull stud 1209.

Build-in spindle assembly 1200 may provide the following advantages comparing to a separate spindle assembly and tool holder:
- Build-in spindle assembly 1200 includes fewer parts - tool holder 700 and the housing 101 are now a single and united part 1201. As a result, there is no need for front end clamping nut 720 and rear cover 117. This may reduce overall costs. Additionally, there is no need to fit housing 101 to tool holder 700. Thus, inaccuracies that may result from tolerance errors (caused by the manufacture of both tool holder 700 and housing 101, or as a result of corrosion due to usage of these parts) are eliminated, and the overall accuracy of build-in spindle assembly 1200 may be improved.
- The overall weight of build-in spindle assembly 1200 is reduced because there is no need for front end clamping nut 720. Moreover, weight is reduced at a point which is far from the machine socket, thus reducing inaccuracies.
- The diameter of the spindle is not limited by the design of the standard tool holder 700, and specifically by the diameter of the clamping nut 720. The diameter may be reduced to enable better access of the tool to edges of the machined piece, or may be increased to enable using bigger turbines and/or provide higher moments.
- This configuration may allow installation of a device for measuring the rotation speed on build-in spindle assembly 1200. Both magnetic and optical devices for measuring the rotation speed typically require access to rotating shaft 110. In build-in spindle assembly 1200, this may be provided by an aperture at housing 101. This is not feasible if a separate tool holder and spindle are used.

While certain features of the invention have been illustrated and described herein, many modifications, substitutions, changes, and equivalents will now occur to those of ordinary skill in the art falling under the scope of protection of the appended claims.

## Claims

1. A spindle assembly (100) configured to be assembled in a machining device, the spindle assembly (100) having a rear end and a front end, with the front end being proximal to a tool clamping system (120) of the spindle assembly (100), and the rear end opposite to the tool clamping system (120), the assembly comprising:
a rotating shaft (110);
a bearing assembly (103; 105), comprising a front end bearing assembly (105) and a rear end bearing assembly (103), configured to support the rotating shaft and to enable high-speed rotation of the shaft within the spindle assembly;
a turbine (107) operatively connected with the rotating shaft (110), the turbine (107) configured to rotate the rotating shaft (110);
a hollow housing (101) to mechanically support components of the spindle assembly (100), the hollow housing (101) comprising a plurality of passages to allow flow of high pressure fluid provided by the machining device; and
a front cover (102) located in front of the hollow housing (101), the front cover (102) comprising:
a first group of passages (301), fluidly connected to the plurality of passages of the hollow housing (101), to allow the high pressure fluid to flow from the passages of the hollow housing (101) towards the blades (400) of the turbine (107) and rotate the turbine (107);
a hollow space (310; 311) located substantially at a center of the front cover to provide free space for the blades of the turbine (107);
openings (304) located at the front end of the front cover to allow low pressure fluid to flow from the hollow space out of the spindle assembly (100);
**characterised in that** the spindle assembly further comprises:
a second group of passages (320) extending from between the blades and the front end bearing assembly (105), to the front end (330) of the front cover to allow collection of low pressure fluids that flow towards the rear end of the spindle assembly after hitting the blades of the turbine (107) and to direct these fluids towards the front end of the front cover (102) and out of the spindle assembly,
wherein the turbine is placed between the front end bearing assembly (105) and the front cover (102).

2. The spindle assembly of claim 1, wherein the spindle assembly is configured to be assembled at an internal taper socket (710) of a tool holder (700), and wherein at least the rear end bearing assembly is disposed in a part of the spindle assembly which is configured to be situated in a space defined by the taper socket of the tool holder and a front end clamping nut (720).

3. The spindle assembly of claim 1, wherein the housing comprises a rear section (1202) configured to be assembled onto the machining device.

4. The spindle assembly of any preceding claim, wherein the hollow space of the front cover comprises a rear section (310) and a front section (311), wherein the rear section of the hollow space is configured to provide space for the turbine blades (400), the rear section of the hollow space having a diameter larger than the diameter of the turbine, and wherein the front section of the hollow space extends in front of the turbine and has a diameter larger than the diameter of the rear section of the hollow space, to allow collection of fluids after hitting the blades of the turbine;

5. The spindle assembly of any preceding claims, wherein the front cover comprises adjustable sprinklers (816) assembled at the second group of passages and configured to enable adjustable directing of the low pressure fluids exhausted out of the spindle assembly.

6. The spindle assembly of any preceding claim wherein each passage of the first group of passages comprises a tapered section (302), wherein a narrow end (303) of the tapered section faces the blades of the turbine (107).

7. The spindle assembly of claim 6, wherein the openings of the first group of passages towards the blades (400) of the turbine are elliptical.

8. The spindle assembly of any preceding claim, wherein a pressure surface (1020) of the blades (1010) concaved in the radial direction.

9. The spindle assembly of any preceding claim, wherein a pressure surface (1010) of the blades comprises a concaved section at a rear end of the blades, proximal to a connection of the blades to a base (1030) of the turbine (804), and a substantially straight section (1050) at a front end of the blades, at a distance from the a connection to the base of the turbine, and wherein the first group of passages (301) are configured to inject the high pressure fluids towards the connection line of the concaved section and the straight section.

10. The spindle assembly of any preceding claim, wherein the turbine comprises a base (430) to which the blades (400) are attached at the rear end of the blades, wherein openings of the second group of passages are facing the base.

11. The spindle assembly of any preceding claim, wherein a gap (500) is provided between the inner side of the blades (400) of the turbine (107) and the rotating shaft (110).

## Patentansprüche

1. Spindelanordnung (100), die dazu konfiguriert ist, in einer Bearbeitungsvorrichtung zusammengebaut zu werden, wobei die Spindelanordnung (100) ein hinteres Ende und ein vorderes Ende aufweist, wobei das vordere Ende nahe einem Werkzeugspannsystem (120) der Spindelanordnung (100) und das hintere Ende gegenüber des Werkzeugspannsystems (120) gelegen sind, wobei die Anordnung Folgendes umfasst:
eine rotierende Welle (110);
eine Lageranordnung (103; 105), die eine Vorderend-Lageranordnung (105) und eine Hinterend-Lageranordnung (103) umfasst und dazu konfiguriert ist, die rotierende Welle zu stützen und eine Hochgeschwindigkeitsrotation der Welle innerhalb der Spindelanordnung zu ermöglichen;
eine Turbine (107), die betriebsfähig mit der rotierenden Welle (110) verbunden ist, wobei die Turbine (107) dazu konfiguriert ist, die rotierende Welle (110) zu rotieren;
ein hohles Gehäuse (101) zum mechanischen Stützen von Bauteilen der Spindelanordnung (100), wobei das hohle Gehäuse (101) eine Vielzahl von Durchgängen umfasst, um den Durchfluss von Hochdruckfluid, das von der Bearbeitungsvorrichtung bereitgestellt wird, zu ermöglichen; und
eine vordere Abdeckung (102), die sich vor dem hohlen Gehäuse (101) befindet, wobei die vordere Abdeckung (102) Folgendes umfasst:
eine erste Gruppe von Durchgängen (301), die mit der Vielzahl von Durchgängen des hohlen Gehäuses (101) in Fluidverbindung steht (101), um es dem Hochdruckfluid zu ermöglichen, von den Durchgängen des hohlen Gehäuses (101) zu den Schaufeln (400) der Turbine (107) zu fließen und die Turbine (107) anzutreiben;
einen Hohlraum (310; 311), der sich im Wesentlichen in einer Mitte der vorderen Abdeckung befindet, um freien Raum für die Schaufeln der Turbine (107) bereitzustellen;
Öffnungen (304), die sich am Vorderende der vorderen Abdeckung befinden, um es Niederdruckfluid zu ermöglichen, von dem Hohlraum aus der Spindelanordnung (100) heraus zu fließen; **dadurch gekennzeichnet, dass** die Spindelanordnung ferner Folgendes umfasst:
eine zweite Gruppe von Durchgängen (320), die sich von zwischen den Schaufeln und der Vorderend-Lageranordnung (105) zum Vorderende (330) der vorderen Abdeckung hin erstrecken, um ein Sammeln von Niederdruckfluiden, die nach dem Auftreffen auf die Schaufeln der Turbine (107) zum Hinterende der Spindelanordnung fließen, zu ermöglichen und um diese Fluide zum Vorderende der vorderen Abdeckung (102) hin und aus der Spindelanordnung heraus zu leiten, wobei die Turbine zwischen der Vorderend-Lageranordnung (105) und der vorderen Abdeckung (102) platziert ist.

2. Spindelanordnung nach Anspruch 1, wobei die Spindelanordnung dazu konfiguriert ist, an einer inneren Kegelhülse (710) eines Werkzeughalters (700) zusammengebaut zu werden, und wobei mindestens die Hinterend-Lageranordnung in einem Teil der Spindelanordnung angeordnet ist, der dazu konfiguriert ist, in einem Raum, der durch die Kegelhülse des Werkzeughalters und eine Vorderend-Spannmutter (720) definiert ist, gelegen zu sein.

3. Spindelanordnung nach Anspruch 1, wobei das Gehäuse einen hinteren Abschnitt (1202) umfasst, der dazu konfiguriert ist, auf der Bearbeitungsvorrichtung zusammengebaut zu werden.

4. Spindelanordnung nach einem der vorhergehenden Ansprüche, wobei der Hohlraum der vorderen Abdeckung einen hinteren Abschnitt (310) und einen vorderen Abschnitt (311) umfasst, wobei der hintere Abschnitt des Hohlraums dazu konfiguriert ist, Raum für die Turbinenschaufeln (400) bereitzustellen, wobei der hintere Abschnitt des Hohlraums einen Durchmesser hat, der größer als der Durchmesser der Turbine ist, und wobei sich der vordere Abschnitt des Hohlraums vor der Turbine erstreckt und einen Durchmesser hat, der größer als der Durchmesser des hinteren Abschnitts des Hohlraums ist, um ein Sammeln von Fluiden nach deren Auftreffen auf die Schaufeln der Turbine zu ermöglichen.[AK1]

5. Spindelanordnung nach einem der vorhergehenden Ansprüche, wobei die vordere Abdeckung einstellbare Sprinkler (816) umfasst, die an der zweiten Gruppe von Durchgängen zusammengebaut und dazu konfiguriert sind, ein einstellbares Leiten der Niederdruckfluide zu ermöglichen, die aus der Spindelanordnung ausgestoßen werden.

6. Spindelanordnung nach einem der vorhergehenden Ansprüche, wobei jeder Durchgang der ersten Gruppe von Durchgängen einen sich verjüngenden Abschnitt (302) umfasst, wobei ein schmales Ende (303) des sich verjüngenden Abschnitts den Schaufeln der Turbine (107) zugewandt ist.

7. Spindelanordnung nach Anspruch 6, wobei die Öffnungen der ersten Gruppe von Durchgängen zu den Schaufeln (400) der Turbine hin elliptisch sind.

8. Spindelanordnung nach einem der vorhergehenden Ansprüche, wobei eine Druckfläche (1020) der Schaufeln (1010) in radialer Richtung konkav ist.

9. Spindelanordnung nach einem der vorhergehenden Ansprüche, wobei eine Druckfläche (1010) der Schaufeln einen konkaven Abschnitt an einem Hinterende der Schaufeln nahe einer Verbindung der Schaufeln mit einem Unterbau (1030) der Turbine (804) und einen im Wesentlichen geraden Abschnitt (1050) an einem Vorderende der Schaufeln in einem Abstand von einer Verbindung zum Unterbau der Turbine umfasst, und wobei die erste Gruppe von Durchgängen (301) dazu konfiguriert ist, die Hochdruckfluide zu der Verbindungslinie des konkaven Abschnitts und des geraden Abschnitts hin zu injizieren.

10. Spindelanordnung nach einem der vorhergehenden Ansprüche, wobei die Turbine einen Unterbau (430) umfasst, an dem die Schaufeln (400) am Hinterende der Schaufeln befestigt sind, wobei Öffnungen der zweiten Gruppe von Durchgängen dem Unterbau zugewandt sind.

11. Spindelanordnung nach einem der vorhergehenden Ansprüche, wobei ein Spalt (500) zwischen der Innenseite der Schaufeln (400) der Turbine (107) und der rotierenden Welle (110) vorgesehen ist.

## Revendications

1. Assemblage de mandrin (100) configuré pour être assemblé dans un dispositif d'usinage, l'assemblage de mandrin (100) ayant une extrémité postérieure et une extrémité antérieure, l'extrémité antérieure étant devant un système de serrage d'outil (120) de l'assemblage de mandrin(100) et l'extrémité postérieure étant opposée au système de serrage d'outil (120), l'ensemble comprenant :
un arbre rotatif (110) ;
un ensemble de roulements (103 ; 105), comprenant un ensemble de roulements d'extrémité antérieure (105) et un ensemble de roulements d'extrémité postérieure (103), configurés pour supporter l'arbre rotatif et pour permettre une rotation à grande vitesse de l'arbre dans l'assemblage de mandrin ;
une turbine (107) connectée de manière opérationnelle à l'arbre rotatif (110), la turbine (107) étant configurée pour faire tourner l'arbre rotatif (110) ;
un logement creux (101) pour supporter mécaniquement des composants de l'assemblage de mandrin (100), le logement creux (101) comprenant une pluralité de passages pour permettre un écoulement de fluide sous haute pression fourni par le dispositif d'usinage ; et
un couvercle avant (102) situé devant le logement creux (101), le couvercle avant (102) comprenant :
un premier groupe de passages (301), reliés de manière fluide à la pluralité de passages du logement creux (101), pour permettre au fluide sous haute pression de s'écouler des passages du logement creux (101) vers les aubes (400) de la turbine (107) ;
un espace creux (310 ; 311) situé sensiblement au centre du couvercle avant pour fournir un espace libre aux aubes de la turbine (107) ;
des ouvertures (304) situées à l'extrémité antérieure du couvercle avant pour permettre à un fluide sous basse pression de s'écouler de l'espace creux hors de l'assemblage de mandrin (100) ;
**caractérisé en ce que** l'assemblage de mandrin comprend en outre :
un second groupe de passages (320) s'étendant entre les aubes et l'ensemble de roulements de l'extrémité antérieure (105), vers l'extrémité antérieure (330) du couvercle avant pour permettre la collecte de fluides sous basse pression qui s'écoulent vers l'extrémité postérieure de l'assemblage de mandrin après avoir heurté les aubes de la turbine (107) et pour diriger ces fluides vers l'extrémité antérieure du couvercle avant (102) et hors de l'assemblage de mandrin, dans lequel la turbine est placée entre l'ensemble de roulements de l'extrémité antérieure (105) et le couvercle avant (102).

2. Assemblage de mandrin selon la revendication 1, dans lequel l'assemblage de mandrin est configuré pour être assemblé au niveau d'une douille conique interne (710) d'un porte-outil (700), et dans lequel au moins l'ensemble de roulements de l'extrémité postérieure est disposé dans une partie de l'assemblage de mandrin qui est configuré pour se situé dans un espace défini par la douille conique du porte-outil et un écrou de serrage de l'extrémité antérieure (720).

3. Assemblage de mandrin selon la revendication 1, dans lequel le logement comprend une section postérieure (1202) configurée pour être assemblée au dispositif d'usinage.

4. Assemblage de mandrin selon l'une quelconque des revendications précédentes, dans lequel l'espace creux du couvercle avant comprend une section postérieure (310) et une section antérieure (311), la section postérieure de l'espace creux étant configurée pour fournir un espace pour les aubes de turbine (400), la section postérieure de l'espace creux ayant un diamètre supérieur au diamètre de la turbine et dans lequel la section avant de l'espace creux s'étend devant la turbine et a un diamètre supérieur au diamètre de la section postérieure de l'espace creux, pour permettre la collecte de fluides après qu'ils aient heurté les aubes de la turbine ;

5. Assemblage de mandrin selon l'une quelconque des revendications précédentes, dans lequel le couvercle avant comprend des sprinkleurs réglables (816) assemblés au niveau du second groupe de passages et configurés pour permettre une direction réglable des fluides sous basse pression évacués hors de l'assemblage de mandrin.

6. Assemblage de mandrin selon l'une quelconque des revendications précédentes, dans lequel chaque passage du premier groupe de passages comprend une section conique (302), dans laquelle une extrémité étroite (303) de la section conique fait face aux aubes de la turbine (107).

7. Assemblage de mandrin selon la revendication 6, dans lequel les ouvertures du premier groupe de passages en direction des aubes (400) de la turbine sont elliptiques.

8. Assemblage de mandrin selon l'une quelconque des revendications précédentes, dans lequel une surface de pression (1020) des aubes (1010) est concave en direction radiale.

9. Assemblage de mandrin selon l'une quelconque des revendications précédentes, dans lequel une surface de pression (1010) des aubes comprend une section concave au niveau d'une extrémité postérieure des aubes, proximal à une connexion des aubes à une base (1030) de la turbine (804), et une section sensiblement droite (1050) à une extrémité antérieure des aubes, à une distance de la connexion à la base de la turbine, et dans laquelle le premier groupe de passages (301) est configuré pour injecter les fluides sous haute pression en direction de la ligne de connexion de la section concave et de la section droite.

10. Assemblage de mandrin selon l'une quelconque des revendications précédentes, dans lequel la turbine comprend une base (430) à laquelle les aubes (400) sont fixées par l'extrémité postérieure des aubes, les ouvertures du second groupe de passages faisant face à la base.

11. Assemblage de mandrin selon l'une quelconque des revendications précédentes, dans lequel un intervalle (500) est prévu entre le côté interne des aubes (400) de la turbine (107) et l'arbre rotatif (110).
